# EUROPÄISCHE PATENTANMELDUNG

(11) **EP 1 864 923 A1**
(43) Veröffentlichungstag der Anmeldung: **12.12.2007**
(21) Anmeldenummer: 06011675.3
(22) Anmeldetag: 06.06.2006
(51) Int. Cl.: B65G 57/03

(54) **Verfahren und Vorrichtung zur Stapelung und Palettierung von Transportbehältern**

(71) Anmelder: Siemens Schweiz AG, 8047 Zürich (CH)
(72) Erfinder: Losenegger, Beat, 5630 Muri (CH)
(74) Vertreter: Kley, Hansjörg

(57) **Zusammenfassung**

Für die Versorgung von Filialen ist es erforderlich, dass Paletten (1) mit Stapeln (3) von Transportbehältern (2) verschiedener Arten und Höhen so auf einer Palette (1) bereitzustellen sind, dass die in den Transportgehältern (2) befindlichen Waren in einer Filiale gerade gemäss der Gestellreihenfolge in die Gestelle versorgt werden können.
Dazu wird ein Verfahren und eine Vorrichtung vorgeschlagen, bei denen die gleiche Anzahl Greifer (12) und zu bildende Stapel (3) vorgesehen ist. Die Greifer (12) sind mit Gabeln (13) versehen. Die Transportbehälter (2) werden dabei individuell pro Stapel (3) abgesenkt und nach erfolgter Absenkung werden die Gabeln (13) herausgezogen. Auf diese Weise ist es insbesondere möglich, Transportbehälter (2) zu stapeln, deren Boden beispielsweise durch verdorbene Agrargüter aufgeweicht und nicht mehr tragfähig ist.

## Beschreibung

Die vorliegende Erfindung betrifft ein Verfahren und eine Vorrichtung zur Stapelung und Palettierung unterschiedlicher Transportbehälter nach dem Oberbegriff des Patentanspruches 1 bzw. des Patentanspruches 10.

In logistischen Prozessen ist es eine häufig auftretende Anforderung, dass an einer Kommissionierstation zu entnehmende mit gewünschten Artikeln befüllte Transportbehälter in einer vorgegebenen Sequenz zuzuführen und zu stapeln sind. Dabei sind Paletten mit Stapeln von Transportbehältern verschiedener Arten und Höhen so bereitzustellen, dass diese Stapel in einer Filiale gerade gemäss der Gestellreihenfolge in die Gestelle versorgt werden können, Je nach gelieferter Ware werden dabei die Transportbehälter, z.B. Kartons mit Agrarprodukten direkt in die verkaufsregale eingesetzt oder es werden die in den Transportbehältern befindlichen Waren in die Gestelle versorgt, beispielsweise 1 kg-Säcke mit Zucker. Üblicherweise werden auf einer Palette 4 oder 8 Stapel gebildet. Unter dem Begriff verschiedene Arten von Transportbehältern wird in nicht abschliessender Aufzählung subsumiert: Kartongebinde für Agrargüter, wieder verwendbare Plastik-Gebinde. Im Sinne dieser Schrift dient der Begriff «Transportbehälter» als Oberbegriff für einmalig verwendbare Kartons oder für wieder verwendbare Gebinde. Die Art des Materials der wieder verwendbaren Gebinde ist dabei unerheblich.

Im Folgenden wird das Problem mit Paletten mit vier Stapeln erläutert. Das technische Problem und deren Lösung sind jedoch auch für 2 oder 8 Stapel oder eine andere Anzahl von Stapeln gegeben. Der Begriff «Stapeln» wird verstanden als ein Aufeinandexreihen/Aufeinanderbeigen von Transportbehältern mit gleichem Grundriss, üblicherweise ist dieser rechteckig, allenfalls quadratisch. Der Vorgang des Aufeinanderreihens/Aufeinanderbeigens resultiert in einem Stapel. Mit Ausnahme des Palettenbodens sind die Ebenen der Transportbehälter der vier Stapel nicht koplanar, da die Transportbehälter aufgrund der verschiedenen zu transportierenden Güter auch verschiedene Höhen aufweisen. Insbesondere für Agrargüter wie beispielsweise Tomaten, Trauben, Birnen, Melonen, usw. sind Kartons vorgesehen. Bei solchen Kartons ist weiter zu beachten, dass diese nicht am Rande gefasst werden können, da sonst die Gefahr besteht, dass diese Agrargüter herausfallen oder leicht gedrückt werden. Darüber hinaus ist zu berücksichtigen, dass ggf. der Boden aufgeweicht sein kann und bei einem Fassen dieser Gebinde am Rand die Früchte herausfallen können.

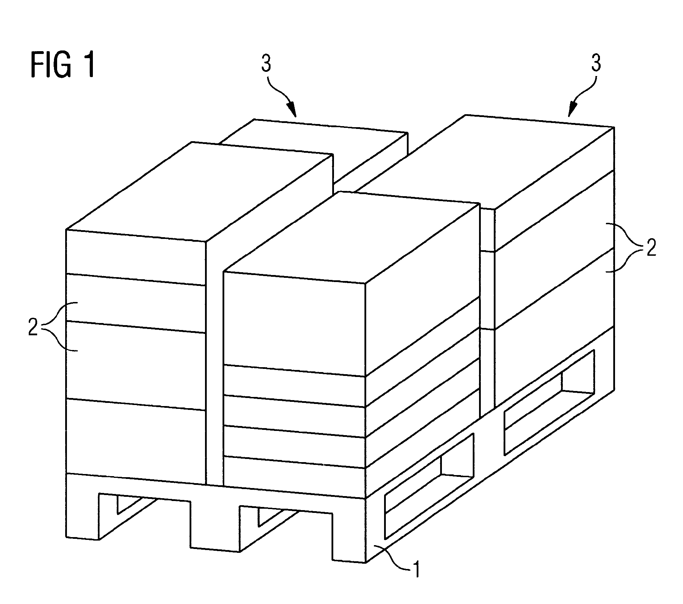

Anhand der Figur 1 wird die Problemstellung schematisch visualisiert. Figur 1 zeigt vier Stapel 3 von unterschiedlich hohen Transportbehältern 2. Diese vier Stapel 3 sind auf einer Palette 1 angeordnet.

Bisher wurden die Paletten 1 entweder lagenweise palettiert, d,h, alle Stapel 3 haben Transportbehälter 2 mit gleichen Höhen oder bei unterschiedlichen Höhen stapelweise, d.h. zuerst wurden die Stapel 3 einzeln gebildet und anschliessend die fertigen Stapel 3 einzeln oder ggf. paarweise auf die Paletten 1 gestellt. Es wurden also im letzteren Fall die Verfahrensschritte Stapelung und Palettierung strikt sequentiell ausgeführt.

Derzeit bekannte Vorrichtungen sind heute nicht in der Lage, in effizienter und Platz sparender weise direkt auf einer Palette 1 Stapel 3 zu bilden, die aus Transportbehältern 2 verschiedener Höhe gebildet sind.

Der vorliegenden Erfindung liegt daher die Aufgabe zugrunde, ein Verfahren und Vorrichtung anzugeben, mit denen es möglich ist, auf einer Palette eine vorgegebene Anzahl von Stapeln von Transportbehältern zu bilden, wobei die einzelnen Transportbehälter zwar gleichen Grundriss aber eine individuelle Höhe aufweisen.

Diese Aufgabe wird durch die im Patentanspruch 1 bzw. 10 angegebenen Massnahmen gelöst.

Die vorliegende Erfindung ermöglicht eine gleichzeitige Palettierung einer vorgegebenen Anzahl Stapel auf einer Palette unabhängig davon
- ob die Stapel unterschiedliche Höhen aufweisen,
- wie hoch die einzelnen Transportbehälter sind,
- ob die Transportbehälter als wieder verwendbare Gebinde oder als einmal verwendbare Kartons ausgebildet sind.

Die vorliegende Erfindung ermöglicht das Stapeln verschieden hoher Transportbehälter ohne dass diese von oben her oder von der Seite her getragen oder gefasst werden. Dadurch ist sichergestellt, dass auch Transportbehälter mit defektem Boden (=nasser Kartonboden) ohne Zwischenfälle gestapelt werden können.

Es kann auch vorgesehen werden, dass die Transportbehälter nicht einzeln, sondern bereits auf einem «kleinen Stapel» von zwei Transportbehältern angeliefert für die Palettierung angeliefert werden. Dies ist insbesondere für so genannte «halbe Gebinde» vorgesehen. «Halbe Gebinde» sind Transportbehälter, die die Hälfte der Höhe eines regulären oder allenfalls genormten Transportbehälters aufweisen. Auch für solche kleinen Stapel ist die vorliegende Erfindung sehr geeignet, in Bezug auf das Steuerungssystem oder einen Sensor zur Detektion der Höhe der bereits auf einer Palette gestapelten Transportbehälter ändert sich dabei nichts, da die Höhe dieses Transportbehälterpaares gleich der Höhe einer regulären Transportbehälters ist. Durch das Anheben von unten mit dem Greifer ändert sich auch nichts bezüglich des Handlings dieser Transportbehälter. Die Erfindung kann daher auch für stapelweise herangeführte Transportbehälter eingesetzt werden, stapelweise bedeutet hier ein Stapel von 2 bis etwa 4 Transportbehälter.

Der Vorteil, dieser Erfindung besteht also darin, dass gleichzeitig alle Stapel einer Palette 1 gebildet werden können, auch wenn diese unterschiedliche Höhen durch unterschiedliche Gebindetypen aufweisen. Dadurch wird die Flexibilität der Stapelbildung mit der Leistung der Lagenpalettierung kombiniert.

Vorteilhafte Ausgestaltungen der Erfindung sind in weiteren Ansprüchen angegeben.

Die Erfindung wird nachfolgend anhand der Zeichnung beispielsweise näher erläutert. Dabei zeigen:
- Figur 1: Palette mit vier Stapeln von Transportbehältern unterschiedlicher Höhe;
- Figur 2: Grundriss einer Anlage mit der Vorrichtung zur Stapelung und Palettierung von Transportbehältern;
- Figur 3: Perspektivische Ansicht einer Vorrichtung zur Stapelung und Palettierung von Transportbehältern;
- Figur 4: Grundriss der in Figur 3 gezeigten Vorrichtung;
- Figur 5: Darstellung des letzten Bewegungsschrittes zur Ablage eines Transportbehälters.

Die Vorrichtung gemäss der vorliegenden Erfindung wird im folgenden Kontext Palettierer 10 genannt, dabei ist zu beachten, dass dieser Palettierer 10 sowohl stapelt als auch lagenweise palettiert; synonym kann im Kontext der vorliegenden Erfindung der Palettierer 10 auch Linearroboter genannt werden.

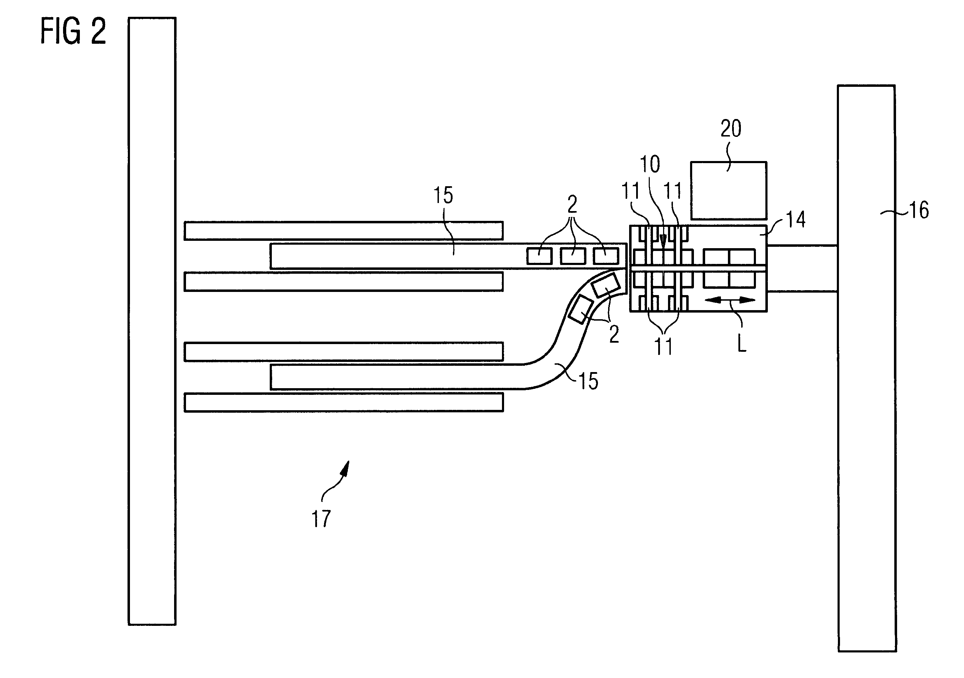

Figur 2 zeigt einen Überblick über eine Anlage mit einer Ausführungsform der vorliegenden Erfindung: Die mit Gütern beschickten Transportbehälter 2 werden sortiert auf zwei Bereitstellbahnen 15 herangeführt. Sortiert heisst hier, dass die Transportbehälter 2 in einer gemäss der pro Filiale (=Verkaufsstelle eines Grossverteilers) geordneten Gestellreihenfolge durch einen Sorter 17 geordnet sind. Die Bereitstellbahn 15 kann als Rollbahn 15, als Bereitstellungsrollbahn 15 oder ggf. auch als Förderbahn 15 ausgeführt sein. In einem Rahmen 14 ist der vorgenannte Palettierer 10 in Richtung L verschiebbar. Dem Rahmen 14 können mit Transportbehältern 2 zu befüllende Paletten 1 zugeführt werden bzw. der Rahmen 14 ist mit Paletten 1 beschickbar. Diese Paletten werden einem Palettenmagazin 20 entnommen. Nach erfolgter Stapelung (Einzelheiten dazu siehe weiter unten) werden die mit Transportbehältern 2 befüllten Paletten 1 über eine Bahn 16 einer Verladestation auf Eisenbahnwagen oder Lastwagen zugeführt.

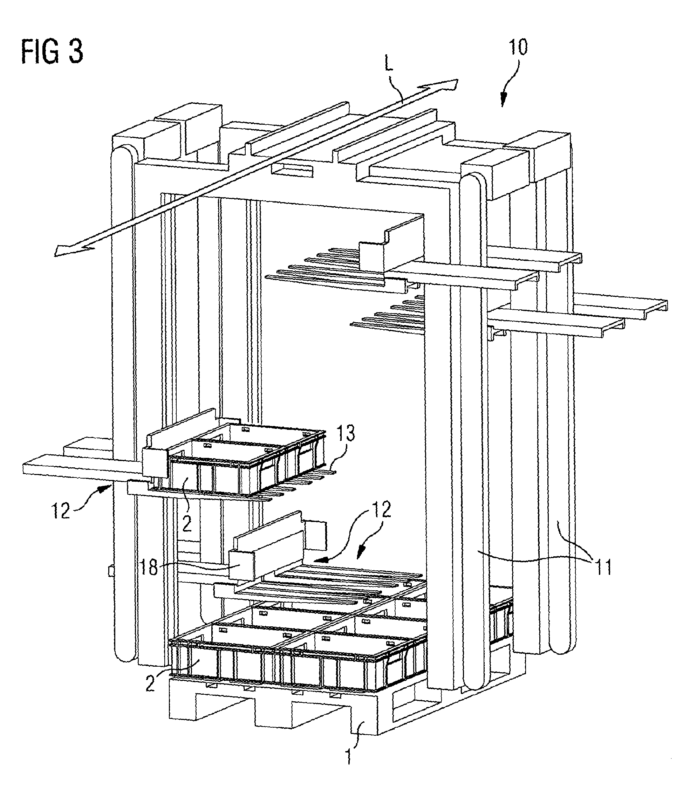

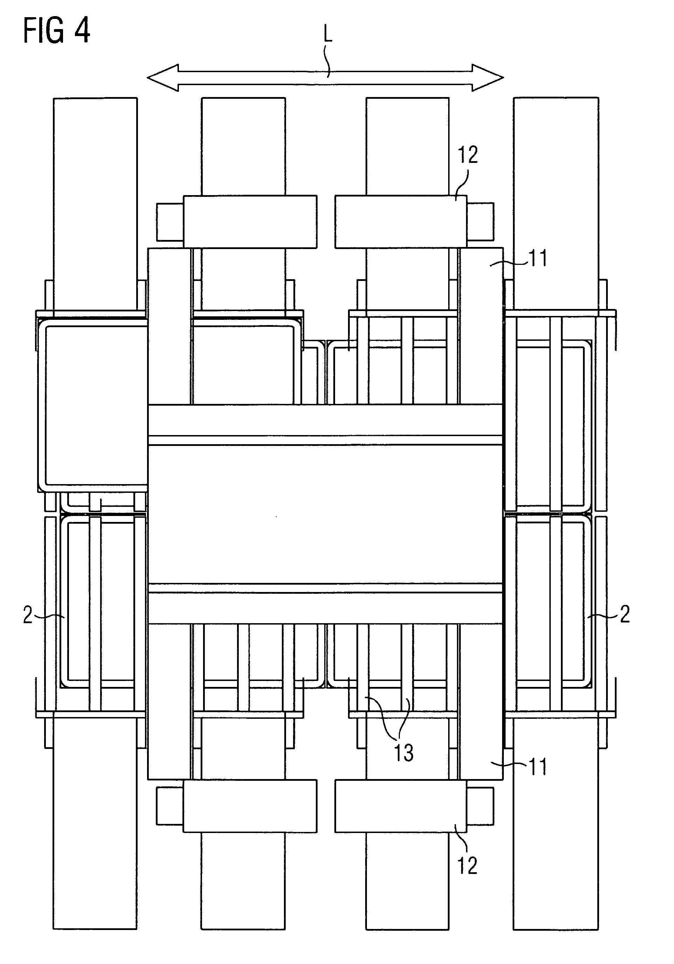

Anhand der Figuren 3 und 4 wird das Verfahren und der Palettierer 10 zur gleichzeitigen Stapelung und Palettierung von Transportbehältern 2 erläutert. Gleichzeitig bedeutet in diesem Kontext einerseits, dass das Stapeln und Palettieren sukzessive im gleichen Arbeitsgang erfolgt. Die mit Gütern beschickten Transportbehälter 2 werden auf zwei nebeneinander liegenden Bereitstellbahnen 15 gemäss dem geforderten Palettenbild lagenweise bereitgestellt und zugeführt. Lagenweise bedeutet hier: Pro Absenkung und nicht koplanar. Aufgrund der verschiedenen Höhen der Transportbehälter sind die Ebenen der Transportbehälter 2 der verschiedenen Stapel 3 nicht koplanar, ausgenommen: Lediglich die untersten Transportbehälter 2 der vier Stapel 3 sind koplanar auf der Palette 1. Der Palettierer 10 ist dabei hängend an Laufschienen (in den Figuren nicht dargestellt) in Richtung L horizontal verschiebbar, um die von den beiden Bereitstellbahnen 15 herangeführten Transportbehälter 2 über die Palette zu verschieben. Die Figur 4 zeigt den Palettierer 10 im Grundriss. Aus der Figur 3 unten ist unschwer zu erkennen, dass der Palettierer 10 hängt, das heisst der Palettier 10 ist an einer nicht dargestellten Laufschiene in Richtung L verschiebbar ist. Dieses Hängen ist unter anderem deshalb erforderlich, damit über die zuführenden Bahnen wie auch über Palette 1 gefahren werden kann. Wie bereits ausgeführt, können anstelle von einem hier regulär genannten Transportbehälter 2 zwei so genannt halbe Gebinde gestapelt herangeführt werden. Die Höhe dieser zwei Gebinde entspricht der Höhe der regulären Transportbehälter 2. Ein solcher Zweierstapel kann auf die gleiche Weise wie ein regulärer Transportbehälter im gleichen Arbeitsgang auf einer Palette gestapelt und somit palettiert werden.

Der Palettierer 10 umfasst vier vertikale Verfahrschienen 11, auf denen pro Palettenstapel 3 ein Greifer 12 geführt wird. Die Greifer 12 können unabhängig voneinander die Transportbehälter 2 auf die einzelnen Stapel 3 gleichzeitig in unterschiedlichen Höhen abstellen. Hier wird auf die zweite Bedeutung des Begriffes gleichzeitig hingewiesen, nämlich in Bezug auf das individuelle Absenken von vier Transportbehältern 2 auf die zu bildenden Stapel 3.

Die Greifer 12 sind mit Gabeln 13 versehen. Die Gabeln 13 werden auf den Bereitstellbahnen 15 zwischen den Rollen (-abständen) unter die Gebinde 3 oder Karton 3 gefahren und angehoben. Der Palettierer 10 wird innerhalb des Rahmens 14 in Richtung L über die Palette verschoben. Nach dem der Palettierer 10 über die Palette gefahren ist, werden die Greifer 12 längs der vertikalen Verfahrschienen 11 auf die aktuellen Stapelhöhen abgesenkt. Die genaue Höhe der jeweiligen Stapel 3 kann mit Lichtschranken oder Datentracking ermittelt werden. Datentracking bedeutet: für die in Transportbehältern 2 befindlichen Waren ist in einem Steuerungssystem die den verschiedenen Transportbehältern 2zugehörige Höhe gespeichert, aufgrund der Vorgeschichte des Stapelns kann so eine Höhe eines jeden Stapels 3 kalkuliert werden.

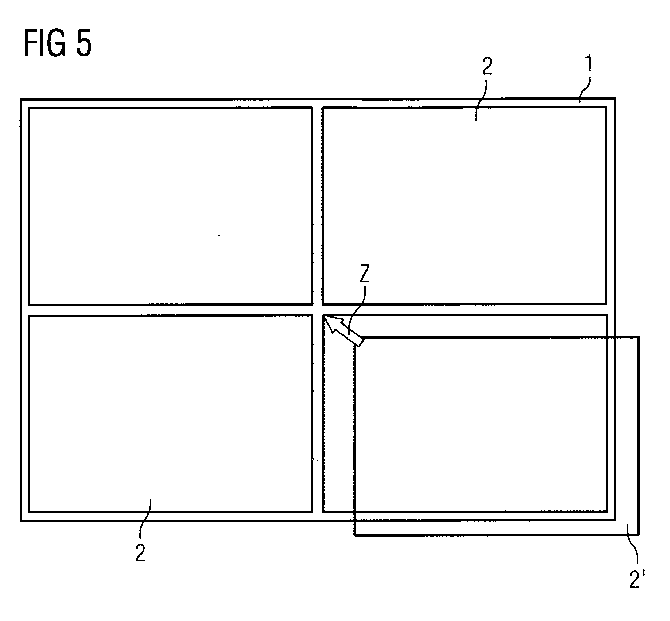

Die zu stapelnden Transportbehälter 2 haben einerseits unterschiedliche Masse aufgrund deren Herstellung oder aufgrund der Abnützung. Sind die Transportbehälter 2 aus Karton, ist deren tatsächliche Abmessung auch abhängig von der von einem Transportbehälter 2 zu tragenden Last der darüberliegenden Transportbehälter 2. Diese Abmessungsunterschiede führen dazu, dass ein Stapel 3 in der Regel nicht exakt orthogonal zur Ebene einer Palette 1 steht und somit ein Stapel durchaus im Bereich von Zentimetern gegen oben ausserhalb der exakten Kontur liegt. Dies muss beim Absenken gemäss der vorliegenden Erfindung ebenfalls berücksichtigt werden. Dazu ist in einer Weiterbildung vorgesehen, dass die Greifer 12 über einen Anschlag 18 verfügen, mit denen ein abzusenkender Transportbehälter 2' genau positioniert werden kann. Dies wird anhand der Figur 5 wie folgt erläutert: Das Steuerungssystem zum Palettierer 10 kennt das Zentrum der zu befüllenden Palette 1. Das Absenken eines Transportbehälters 2' erfolgt zunächst an der ungefähren Position etwas ausserhalb des Zentrums der Palette 1. Erst unmittelbar vor dem Aufsetzen des Transportbehälters 2' auf den Stapel 3 erfolgt eine Bewegung in Richtung Zentrum. Dies ist in der Figur 5 mit einem Pfeil dargestellt.

Der vorgenannte Anschlag 18 hat unabhängig noch eine weitere Funktion: Der Anschlag 18 dient als Gegenelement beim Herausfahren/Herausziehen der Gabel 13. Auf diese Weise ist sichergestellt, dass der betreffende Transportbehälter2 beim Herausziehen der Gabeln 13 eine definierte Position beibehält

Die vorstehend beschriebene Ausführungsform bezieht sich auf eine Palette 1 vier Stapeln 3. Die Erfindung kann aber entsprechend ausgeführt werden für eine Palettierung mit 2 Stapeln 3 oder allenfalls 6 oder acht Stapeln 3. Dies ist lediglich abhängig von den Grundrissen der Palette 1 und den Transportbehältern 2.

Die konkrete Ausgestaltung für die Höhenbestimmung der zu bildenden Stapel 3 ist unabhängig von den Einzelheiten der Zuführung der Transportbehälter 2.

Werden zwei oder vier Stapel 3 pro Palette 1 gebildet, sind zweckmässigerweise eine der Anzahl Stapel 3 entsprechende Anzahl von Greifern 12 vorzusehen. Werden hingegen 6 oder 8 Stapel pro Palette gebildet, kann das erfindungsgemässe Verfahren auch mit einer gegenüber der Anzahl Stapel geringeren Anzahl von Greifern durchgeführt werden, ggf. ist in einem Arbeitsgang ein Greiferpaar leer, d.h. es führt keine Stapelung/Palettierung aus, lediglich das andere Paar führt dies aus.

### Liste der verwendeten Bezugszeichen, Glossar

- 1: Palette
- 2: Transportbehälter; Gebinde, Karton-Gebinde
- 2': abzusetzender, abzusenkender Transportbehälter
- 3: Stapel, Gebindestapel
- 10: Palettierer, Linearroboter
- 11: Verfahrschiene
- 12: Greifer
- 13: Gabel
- 14: Rahmen des Palettierers zur Linearbewegung
- 15: Bereitstellbahn, Rollbahn, Bereitstellungsrollbahn; Förderband
- 16: Bahn zur Wegführung der mit Stapeln versehenen Paletten
- 17: Sorter, nicht Gegenstand der vorliegenden Erfindung
- 18: Anschlag
- 20: Leerpalettenmagazin
- L: Bewegungsrichtung des Palettiers 10 innerhalb Rahmen 14; Linearbewegung
- Z: Bewegungsrichtung der Gabeln und des Greifers in Richtung Palettenzentrum

## Patentansprüche

1. Verfahren zur Stapelung und Palettierung unterschiedlich hoher Transportbehälter (2) umfassend die Verfahrensschritte :
A von einem Palettenmagazin (20) wird eine mit wenigstens zwei Stapeln (3) von Transportbehältern (2) zu befüllende Palette (1) einem Rahmen (14) zugeführt;
B die Transportbehälter (2) werden auf zwei Bereitstellungsbahnen (15) in einer geordneten Sequenz einem Palettierer (10) zugeführt; wobei der Palettierer (10) eine Mehrzahl von Greifern (12) aufweist;
**gekennzeichnet durch** die Verfahrensschritte
C die auf zwei Bereitstellungsbahnen (15) herangeführten Transportbehälter (2) werden vom mit Gabeln (13) versehenen Greifer (12) von unten her erfasst und angehoben;
D der Palettierer (10) wird innerhalb des Rahmens (14) über die zu befüllenden Palette (1) verschoben (L);
E die von den Greifern (12) getragenen Transportbehälter (2') werden abgesenkt auf die zu bildenden Stapel (3) von Transportbehältern (2);
F nach erfolgter Absenkung werden die Gabeln (13) aus den Stapeln (3) **durch** eine Horizontalbewegung herausgezogen.

2. verfahren nach Anspruch 1,
**dadurch gekennzeichnet, dass**
im Verfahrensschritt E die Höhe eines Stapels (3) durch wenigstens einen Sensor erfasst wird, um das Absenken eines Transportbehälters auf die Stapelhöhe zu steuern oder zu regeln.

3. Verfahren nach Anspruch 1,
**dadurch gekennzeichnet, dass**
im Verfahrensschritt E die Höhe eines Stapels (3) durch in einem Steuerungssystem gespeicherten Höhen der Transportbehälter (2) zu kalkulieren, um das Absenken eines Transportbehälters (2') auf die Stapelhöhe zu steuern.

4. Verfahren nach Anspruch 2 oder 3,
**dadurch gekennzeichnet, dass**
im Verfahrensschritt E unmittelbar vor dem Aufsetzen eines Transportbehälters (2) die Greifer (12) eine Horizontalbewegung (Z) zum Zentrum der Palette (1) ausführen.

5. Verfahren nach Anspruch 4,
**dadurch gekennzeichnet, dass**
der Greifer (12) einen Anschlag (18) aufweist, um den betreffenden Transportbehälter (2) zu positionieren.

6. Verfahren nach einem der Ansprüche 1 bis 5,
für den Verfahrensschritt F der Greifer (12) ein Anschlag (18) aufweist, um als Gegenelement beim Herausziehen der Gabeln (13) die korrekte Position des betreffenden Transportbehälters herbeizuführen.

7. Verfahren nach einem der Ansprüche 2 bis 6,
**dadurch gekennzeichnet, dass**
im Verfahrensschritt E die Greifer (12) unabhängig voneinander auf die betreffende Höhe eines Stapels (3) abgesenkt werden.

8. Verfahren nach einem der Ansprüche 1 bis 7,
**dadurch gekennzeichnet, dass**
im Verfahrensschritt C die Bereitstellungsbahnen als Rollbahn ausgeführt ist und dass die Gabeln (13) vor dem Anheben je zwischen zwei Rollen eingeführt werden.

9. Verfahren nach einem der Ansprüche 1 bis 8,
**dadurch gekennzeichnet, dass**
im verfahrensschritt B die Transportbehälter (2) als stapelweise herangeführt werden.

10. Vorrichtung zur Durchführung des Verfahrens nach Anspruch 1 zur Stapelung und Palettierung unterschiedlich hoher Transportbehälter (2), umfassend die folgenden Komponenten:
i) ein Palettenmagazin (20) von dem aus ein Rahmen (14) mit einer Palette (1) beschickbar ist;
ii) ein innerhalb des Rahmens verschiebbarer (L) Palettierer (10), der die gleiche Anzahl von Greifern (12) wie die zu bildende Anzahl Stapel (3) von Transportbehältern (2) aufweist;
iii) zwei Bereitstellungsbahnen (15) auf denen Transportbehälter (2) in einer geordneten Sequenz dem Rahmen (14) zuführbar sind;
**dadurch gekennzeichnet, dass**
iv) die Greifer (12) mit Gabeln (13) versehen sind, um die auf den Bereitstellungsbahnen (15) herangeführten Transportbehälter (2) von unten her zu erfassen und anzuheben;
v) die Greifer (12) individuell längs einer vertikalen Verfahrschiene (11) bewegbar sind, um die erfassten Transportbehälter individuell auf die zu bildenden Stapel abzusenken.

11. Vorrichtung nach Anspruch 10,
**dadurch gekennzeichnet, dass**
ein Steuerungssystem und/oder Sensoren vorgesehen sind, mit denen die jeweilige Höhe eines Stapels (3) bestimmbar ist, um die Greifer (12) auf die jeweilige Höhe des betreffenden Stapels (3) abzusenken.

12. Vorrichtung nach Anspruch 10 oder 11,
**dadurch gekennzeichnet, dass**
die Gabeln (13) horizontal bewegbar sind, damit diese unter dem auf einen Stapel (3) abgesenkten Transportbehälter (2) herausziehbar sind.

13. Vorrichtung nach Anspruch 12,
**dadurch gekennzeichnet, dass**
die Greifer (12) einen Anschlag (18) aufweisen, damit der zu bildende Stapel (3) zurechtgedrückt werden kann und/oder damit der Transportbehälter (2) beim Herausziehen der Gabeln (13) eine definierte Position beibehält.
